# EUROPÄISCHE PATENTSCHRIFT

(11) **EP 3 782 896 B1**
(45) Veröffentlichungstag und Bekanntmachung des Hinweises auf die Patenterteilung: **05.10.2022**
(21) Anmeldenummer: 19193152.6
(22) Anmeldetag: 22.08.2019
(51) Int. Cl.: B62M 6/55, B62M 3/00

(54) **VIBRATIONSENTKOPPLUNG EINER TRETLAGEREINHEIT FÜR EIN ELEKTROFAHRRAD**
VIBRATION DECOUPLING OF A PEDAL BEARING UNIT FOR AN ELECTRIC BICYCLE
DÉCOUPLAGE PAR VIBRATIONS D'UNE UNITÉ DE PALIER DE PÉDALIER POUR UNE BICYCLETTE ÉLECTRIQUE

(43) Veröffentlichungstag der Anmeldung: 24.02.2021
(73) Patentinhaber: maxon international ag, 6072 Sachseln (CH)
(72) Erfinder: Juchli, Dominik, 6078 Lungern (CH)
(74) Vertreter: Grünecker Patent- und Rechtsanwälte PartG mbB

(56) Entgegenhaltungen:
- EP-A1- 2 939 915
- CN-B- 105 449 921
- DE-A1-102016 010 148
- DE-A1-102018 112 412
- DE-A1-102018 212 842
- US-A1- 2016 303 961

## Beschreibung

Die vorliegende Erfindung betrifft eine Antriebsbaugruppe für ein Fahrrad, insbesondere für ein Fahrrad mit einem Elektromotorantrieb, mit einer Tretlagereinheit mit Tretlagergehäuse und einer Befestigungseinrichtung zur stabilen Befestigung des Tretlagergehäuses an einem Fahrradrahmen. Des Weiteren betrifft die Erfindung ein Fahrrad mit einem Elektromotorantrieb und einer solchen Antriebsbaugruppe.

Für Fahrräder mit einem Elektromotorantrieb gibt es, bedingt durch die rasante Entwicklung der Nachfrage, mittlerweile sehr unterschiedliche Konzepte für die notwendige Versteifung der Fahrradrahmen, die Anbringung der Akkus und die Ausgestaltung der Antriebe. Als Elektrofahrrad werden dabei sowohl Pedelecs (pedal electric cycle), bei denen der Motor erst beim Vorliegen einer über die Tretkurbel aufgebrachten Pedalkraft eine Motorunterstützung bereitstellt, als auch Fahrräder mit einem Elektromotorantrieb angesehen, die sich auch ohne eine Pedalkraft fahren lassen. Neben einigen Modellen mit Hecknabenmotor, die die Antriebskraft leise sowie relativ verlust- und verschleißfrei auf das hintere Laufrad übertragen, sind Antriebsbaugruppen mit einem an die Tretlageeinheit gekoppelten Elektromotor weit verbreitet, da diese günstiger herstellbar sind und eine bessere Verteilung des Gewichts am Fahrrad ermöglichen. Ferner weist die Drehzahl der Tretlagereinheit einen begrenzteren Bereich gegenüber der Drehzahl an der Radnabe auf, somit ist eine effizientere Dimensionierung des Antriebes möglich. Solche Mittelmotoren gibt es in unterschiedlichen Ausgestaltungen und Anordnungen, wobei der Elektromotor selbst üblicherweise über eine Getriebeeinheit mit der Tretlagerwelle gekoppelt ist. Da solche Antriebsbaugruppen für Elektrofahrräder nicht nur durch die Krafteinleitung des Elektromotors, sondern auch durch die auf die Tretlagerwelle aufgeprägte Pedalkraft hohen Belastungen und abrupten Belastungsänderungen ausgesetzt ist, muss die mechanische Kopplung zwischen dem Tretlagergehäuse und dem Fahrradrahmen des Fahrrads stabil und entsprechend belastungsfähig ausgebildet sein.

Eine gattungsgemäße Antriebsbaugruppe für eine sichere und stabile Befestigung eines Tretlagergehäuses am Fahrradrahmen beschreibt die DE 10 2018 212 842 A1 oder EP2939915A1. Bei dieser Befestigungseinrichtung wird ein Befestigungsabschnitt zwischen das Tretlagergehäuse und den Fahrradrahmen geschraubt, so dass der Befestigungsabschnitt eine Kraft direkt auf das Tretlagergehäuse und den Fahrradrahmen ausübt und diese voneinander wegbewegt, um so eine stabile Befestigung des Tretlagers am Fahrradrahmen zu realisieren. Dies ermöglicht sowohl eine kompakte Bauweise, eine einfache Montage und eine spielfreie Befestigung der Tretlagereinheit am Fahrradrahmen.

Die aus dem Stand der Technik bekannten Lösungen zur sicheren und stabilen Befestigung der Tretlagereinheit mit Elektromotor am Fahrradrahmen weisen, beispielsweise auch gegenüber Hecknabenmotoren, eine höhere Geräuschbelastung und eine direkte Übertragung der Vibration des Elektromotors an den Fahrradrahmen auf was von vielen Nutzern als nachteilig empfunden wird.

Es ist daher die Aufgabe der vorliegenden Erfindung, die insbesondere bei einem Mittelantrieb eines Elektrofahrrads auftretenden Geräusche und Vibrationen im Fahrradrahmen zu reduzieren und dabei eine sichere und dauerhafte mechanische Kopplung zwischen der Tretlagereinheit und dem Fahrradrahmen zu gewährleisten.

Diese Aufgabe wird erfindungsgemäß dadurch gelöst, dass die Befestigungseinrichtung einen Montagerahmen zur Befestigung am Fahrradrahmen und ein elastisches Verbindungselement zur mechanischen Kopplung und Vibrationsdämpfung zwischen Tretlagergehäuse und Fahrradrahmen aufweist, wobei das elastische Verbindungselement zwischen dem Montagerahmen und dem Tretlagergehäuse positioniert ist. Das elastische Verbindungselement stellt dabei eine funktionale Kopplung zwischen dem Montagerahmen und dem Tretlagergehäuse her, die im Wesentlichen zueinander berührungsfrei sind, d.h. es besteht kein unmittelbarer Kontakt zwischen dem Tretlagergehäuse und dem Montagerahmen, der zu einer ungedämpften Kraft- oder Drehmomentübertragung beiträgt. Dabei ist die Form des Montagerahmens nur durch die Befestigung am Fahrradrahmen und die Anordnung des elastischen Verbindungselements eingeschränkt, auch wenn üblicherweise eine offene oder geschlossene ringförmige Ausgestaltung um die Tretlagerwelle herum zweckmäßig ist. Das elastische Verbindungselement zwischen dem Montagerahmen und dem Tretlagergehäuse ermöglicht eine signifikante Reduzierung der Geräusche und Vibrationen des Elektromotorantriebs, die von der Tretlagereinheit an den Fahrradrahmen des Fahrrads übertragen werden und von dort auch über die mit dem Fahrradrahmen verbundenen Sattel und Lenker an den Nutzer. Neben der Vibrationsdämpfung des elastischen Verbindungselements gegenüber dem Fahrradrahmen ermöglicht die Positionierung des elastischen Verbindungselements zwischen dem Montagerahmen und dem Tretlagergehäuse unverändert eine relativ gute thermische Kopplung des Elektromotorantriebs mit der Tretlagereinheit und über das Tretlagergehäuse sowie über die Tretlagerwelle und die Tretkurbeln mit der Umgebung, so dass die im Elektromotorantrieb entstehende Wärme sicher an die Umgebung abgeführt und ein Wärmestau verhindert werden kann. Eine zweckmäßige Ausführungsform sieht vor, dass die Tretlagereinheit einen Elektromotor und eine Tretlagerwelle zum Antrieb des Fahrrads aufweist, wobei der Elektromotor, insbesondere über eine Getriebeeinheit, mit der Tretlagerwelle gekoppelt ist. Eine solche Tretlagereinheit für ein Elektrofahrrad mit Mittelmotor verbindet sowohl den manuellen Pedalantrieb über die mit der Tretlagerwelle verbundenen Tretkurbeln als auch den elektrischen Hilfsantrieb durch den Elektromotor in einer einzelnen Einheit, wobei eine zwischen dem Elektromotor und der Tretlagerwelle angeordnete Getriebeeinheit eine entsprechende Übersetzung des Elektromotorantriebs ermöglicht. Die Tretlagerwelle ist üblicherweise direkt mit einem Zahnrad oder Kettenrad verbunden, das die Drehbewegung der Tretlagerwelle über eine Antriebskette oder einen Antriebsriemen mit einem Hinterrad des Fahrrads verbindet. Für eine kompakte und von außen unscheinbar in den Fahrradrahmen integrierte Tretlagereinheit mit Elektromotor und Getriebeeinheit ist die Antriebswelle des Elektromotors senkrecht zur Tretlagerwelle ausgerichtet und die Getriebeachse eines zwischen dem Elektromotor und der Tretlagerwelle eingebundenen Getriebes ist in einer Ausführungsvariante ebenfalls senkrecht zur Tretlagerwelle ausgerichtet. Bevorzugt ist das Getriebe als Winkelgetriebe, beispielsweise als Kegelradgetriebe ausgeführt.

Eine weitere Ausbildung sieht vor, dass eine elastische Drehmomentabstützung zwischen dem Elektromotor oder einer Getriebeeinheit und dem Fahrradrahmen vorgesehen ist. Die elastische Drehmomentabstützung ermöglicht das Abstützen des von dem Elektromotor auf die Tretlagereinheit mit Tretlagergehäuse aufgeprägten Drehmoments am Fahrradrahmen, insbesondere bei einer Änderung am Elektromotorantrieb, und verhindert so eine Schwenkbewegung der Tretlagereinheit um die Antriebsachse des Elektromotorantriebs. Die elastische Drehmomentabstützung ist sinnvollerweise aus einem Gummimaterial hergestellt, bevorzugt einem EPDM, einem thermoplastischen Elastomer oder einem Silikonkautschuk, mit einem E-Modul unter 100 MPa, bevorzugt unter 10 MPa.

Eine sichere Ausgestaltung sieht vor, dass das elastische Verbindungselement und der Montagerahmen unlösbar miteinander verbunden sind, wobei das elastische Verbindungselement bevorzugt an dem Montagerahmen angespritzt oder aufvulkanisiert ist. Die unlösbare Verbindung des elastischen Verbindungselements mit der der Tretlagereinheit zugewandten (Innen-) Seite des Montagerahmens, bzw. von entsprechend ausgebildeten Montageringen, erleichtert die mechanische Kopplung des Montagerahmens mit dem Tretlagergehäuse und damit auch die Aufnahme eines am Tretlagergehäuse wirkenden Drehmoments durch den Fahrradrahmen. Alternativ kann das elastische Verbindungselement separat zum Montagerahmen hergestellt werden und erst bei einer Montage zwischen dem Montagerahmen und dem Tretlagergehäuse angeordnet werden. Eine solche separate Herstellung des elastischen Verbindungselements vereinfacht und vergünstigt zwar dessen Herstellung, jedoch steigt der Aufwand bei der Montage des Tretlagergehäuses am Fahrradrahmen und gleichzeitig sinkt das von dem Tretlagergehäuse an den Fahrradrahmen problemlos übertragbare Drehmoment. Sinnvollerweise weist das elastische Verbindungselement ein E-Modul (Elastizitätsmodul) zwischen 0,1 und 100 MPa, bevorzugt zwischen 2,0 und 20,0 MPa auf. Im Rahmen der heutigen Möglichkeiten lassen sich elastische Bauteile, wie das elastische Verbindungselement, in einem sehr breiten E-Modul-Bereich und aus sehr unterschiedlichen Materialien herstellen. Neben der Beeinflussung durch die Temperatur ist das E-Modul von Materialien auch abhängig von dem Feuchtegehalt, der Orientierung der Makromoleküle und der Füllstoffe sowie verschiedenen Prüfparametern. Üblicherweise wird das E-Modul von elastischen Materialien in einem Zugversuch an einem Probekörper ermittelt (z.B. nach DIN ISO 527-1A), wobei aus der Anfangssteigung der Spannungs-Dehnungs-Kurve das E-Modul als Verhältnis von Spannung zu Dehnung berechnet wird. Ein elastisches Verbindungselement mit einem derart geringeren E-Modul ermöglicht neben der mechanischen Kopplung auch eine ausreichende Dämpfung der Schwingungen und Vibrationen an der Tretlagereinheit. Sinnvollerweise ist das elastische Verbindungselement aus einem Gummi-Material hergestellt, bevorzugt aus einem synthetischen Gummimaterial (EPDM), einem thermoplastischen Elastomer oder einem Silikonkautschuk. Neben diesen bekannten elastischen Materialien gibt es auch eine ganze Reihe von weiteren Kunststoffen mit einem geringen E-Modul, die sich für die vorliegende Anwendung eignen und eine ausreichende mechanische Kopplung und Dämpfung zwischen der Tretlagereinheit und dem Montagerahmen bzw. dem Fahrradrahmen ermöglichen. Besonders bevorzugt wäre ein Material mit erwähntem Elastizitätsmodul, welches zusätzlich eine gute thermische Kopplung zwischen dem Tretlagergehäuse und dem Fahrradrahmen ermöglicht.

Eine Ausbildung gemäß Anspruch 1 sieht vor, dass die Befestigungseinrichtung mindestens zwei Montageringe, d.h. zwei offene oder geschlossene ringförmige Montagerahmen, aufweist und dass das elastische Verbindungselement mindestens zwei elastische Ringe umfasst, wobei die elastischen Ringe das Tretlagergehäuse an beiden Enden des Tretlagergehäuses radial zur Tretlagerwelle umschließen und jeweils zwischen einem Montagering und dem häuse positioniert sind. Die Kopplung der Tretlagereinheit über die beiden Enden des Tretlagergehäuses in radialer Richtung zur Tretlagerwelle, verhindert ein Verkanten des Tretlagergehäuses gegenüber dem Fahrradrahmen und ermöglicht eine gleichmäßige Übertragung der an der Tretlagereinheit wirkenden Kräfte auf den Fahrradrahmen. Weiterhin erleichtert die mechanische Kopplung der Tretlagereinheit über die mindestens zwei Montageringe die Integration einer sehr kompakten Antriebsbaugruppe und deren platzsparende Einbindung in den Fahrradrahmen bei einer gleichzeitigen Vibrationsdämpfung.

Gemäss Anspruch 1 weisen mindestens ein Montagering und ein zugeordneter elastischer Ring Formschlusselemente auf um eine rotative Relativbewegung zum Tretlagergehäuse bzw. zur Tretlagerwelle zu verhindern oder zumindest zu begrenzen. Hierdurch wird ein durch die Rotation der Tretlagerwelle erzeugtes und auf das Tretlagergehäuse wirkendes Drehmoment abgestützt. Bevorzugt weist hierzu mindestens ein Montagering und ein zugeordneter elastischer Ring Formschlusselemente, insbesondere seitliche Ausnehmungen auf, um eine relative rotative Bewegung zum Tretlagergehäuse zu verhindern oder zumindest zu begrenzen. Eine solche formschlüssige Ausgestaltung, welche in einer einfachen Form als eine seitliche Ausnehmung in dem Montagering und/oder dem elastischen Ring, die in einen radialen Vorsprung des Tretlagergehäuses, z. B. dem Anschluss des Getriebes oder des Elektromotors, eingreift, ist eine konstruktiv einfache und sichere Lösung eine rotative Relativbewegung zum Tretlagergehäuse zu begrenzen und trotzdem einen Toleranzausgleich in axialer Richtung der Tretlagerwelle zu ermöglichen.

Für eine gute mechanische Kopplung weisen mindestens ein Montagering und ein zugeordneter elastischer Ring zueinander eine formschlüssige Ausgestaltung mit radialen Formschlusselementen auf, um eine relative rotative Bewegung zueinander zu verhindern oder zumindest zu begrenzen. Eine solche formschlüssige Ausgestaltung, beispielsweise gewellte Innen- und Außenflächen des Montagerings und des elastischen Rings, ermöglichen eine gute Kraftübertragung in radialer und tangentialer Richtung.

Eine weitere Modifikation sieht vor, dass mindestens ein elastischer Ring eine formschlüssige Ausgestaltung mit radialen Formschlusselementen gegenüber einer Anlagefläche des elastischen Rings auf dem Tretlagergehäuse aufweist, um eine relative rotative Bewegung zwischen dem elastischen Ring und dem Tretlagergehäuse zu verhindern oder zumindest zu begrenzen. Gerade in Verbindung mit einem auf der Innenfläche des Montagerings angespritzten oder aufvulkanisierten elastischen Ring ermöglicht eine formschlüssige Ausgestaltung der Innenfläche des elastischen Rings und der Anlagefläche auf dem Tretlagergehäuse, beispielsweise mittels gewellter Innen- und Außenflächen als Formschlusselemente, eine gute mechanische Kopplung und radiale sowie tangentiale Kraftübertragung zwischen dem Tretlagergehäuse und dem elastischen Ring.

Eine vorteilhafte Ausgestaltungsform der Antriebsbaugruppe sieht vor, dass mindestens ein Montagering und ein zugeordneter elastischer Ring in Richtung der Tretlagerwelle verschiebbar auf dem Tretlagergehäuse gelagert sind. Der zweite Montagering und der zugeordnete elastische Ring können dabei axial oder radial mittels eines seitlichen Befestigungsdeckels auf dem Tretlagergehäuse fixiert sein. Dies ermöglicht bei der Herstellung der Komponenten für das Elektrofahrrad, insbesondere für den Fahrradrahmen und das Tretlagergehäuse, größere Toleranzen vorzusehen und damit eine günstigere Herstellung der Komponenten, sowie des Fahrradrahmens zu realisieren. Alternativ ist ein Toleranzausgleich auch durch ein Verspannen des Fahrradrahmens und der Montageringe möglich, wobei die Montageringe gegenüber dem Fahrradrahmen mittels einer Schraubverbindung verspannt bzw. zusammengezogen werden, im Gegensatz zum Stand der Technik, bei dem Fahrradrahmen und Tretlagergehäuse oftmals auseinandergedrückt werden.

Eine besondere Variante sieht vor, dass mindestens eine Versteifungshülse vorgesehen ist, wobei sich ein Befestigungsmittel zur Befestigung der mindestens zwei Montageringe am Fahrradrahmen durch die Versteifungshülse erstreckt. Die Befestigungsmittel können an den Befestigungsösen angeordnet sein. Für die Verbindung der zwei Montageringe oder Montagerahmen durch die Versteifungshülse werden üblicherweise Schrauben oder Bolzen als Befestigungsmittel eingesetzt. Die Versteifungshülse ermöglicht dabei eine Versteifung des Fahrradrahmens mittels des Tretlagergehäuses, da die zwischen dem Fahrradrahmen und dem Tretlagergehäuse auftretenden Kräfte besser aufgenommen werden können. Durch die Versteifung zwischen den zwei Montageringen mittels der Versteifungshülse kann der Fahrradrahmen im Bereich des Tretlagers strukturell unverändert bleiben, trotz der Integration einer Tretlagereinheit mit Elektromotor. Entsprechend muss der Fahrradrahmen im Bereich des Tretlagers konstruktiv weder stabiler, noch massiver ausgestaltet werden.

Des Weiteren bezieht sich die vorliegende Erfindung auf ein Elektrofahrrad mit einem Elektromotorantrieb, einem Fahrradrahmen und einer Antriebsbaugruppe nach einer der zuvor beschriebenen Ausführungsformen, wobei die Tretlagereinheit zum Antrieb des Fahrrads eine Tretlagerwelle mit Tretkurbeln und einen mit der Tretlagerwelle gekoppelten Elektromotor aufweist, wobei der Elektromotor insbesondere über eine Getriebeeinheit mit der Tretlagerwelle gekoppelt ist. Durch die besondere Ausgestaltung der Befestigungseinrichtung der Antriebsbaugruppe weist dieses Elektrofahrrad eine Vibrationsentkopplung auf, so dass trotz der mechanischen Kopplung zwischen der Tretlagereinheit und dem Fahrradrahmen eine signifikante Dämpfung der im Elektromotor erzeugten Schwingungen und Vibrationen realisierbar ist. Trotz eines mit der Tretlagereinheit gekoppelten Elektromotors kann so ein vibrationsarmer und leises Antriebssystem ermöglicht werden.

Im Folgenden wird ein Ausführungsbeispiel der vorliegenden Erfindung anhand von Zeichnungen näher erläutert. Es zeigen:
- Fig. 1: ein Fahrrad mit einem Elektromotorantrieb,
- Fig. 2: eine perspektivische Ansicht einer Antriebsbaugruppe mit Befestigungseinrichtung,
- Fig. 3: eine Explosionsansicht des Tretlagergehäuses und der Befestigungseinrichtung, und
- Fig. 4: eine schematische Darstellung der mechanischen und thermischen Kopplung der Tretlagereinheit.

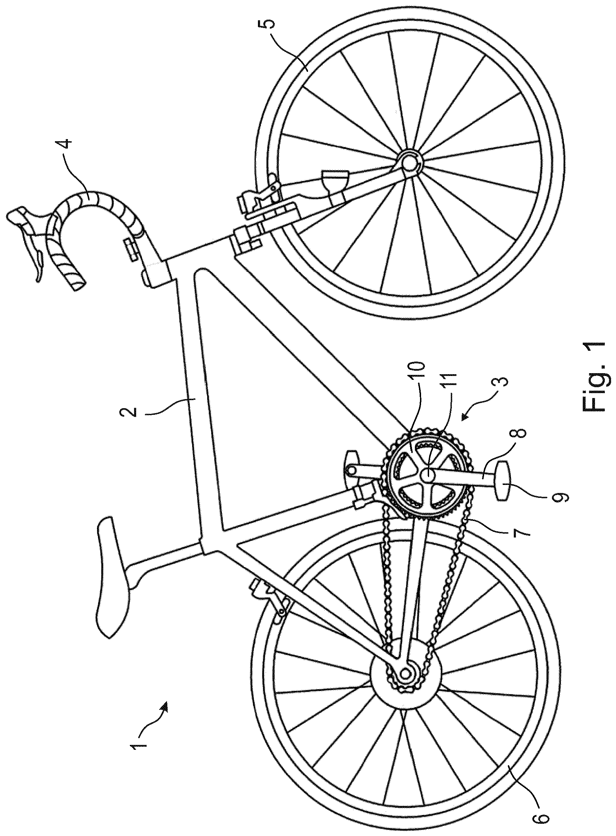

Fig. 1 zeigt beispielhaft ein erfindungsgemäßes Elektrofahrrad 1 mit einer am Fahrradrahmen 2 angeordneten Antriebsbaugruppe 3, einem von einem Lenker 4 gesteuertes Vorderrad 5 sowie einem Hinterrad 6. Das Hinterrad 6 ist über eine Antriebskette 7 mit der Antriebsbaugruppe 3 verbunden. An der Antriebsbaugruppe 3 sind zwei um 180° versetzte Tretkurbeln 8 mit Pedalen 9 angeordnet, die ebenso wie das Antriebszahnrad 10 mit der Tretlagerwelle 11 fest verbunden sind. Die über das Antriebszahnrad 10 zum Hinterrad 6 gespannte Antriebskette 7 kann von einem auf dem Sattel 12 sitzenden Nutzer über die Tretkurbeln 8 direkt mittels Pedalkraft angetrieben werden.

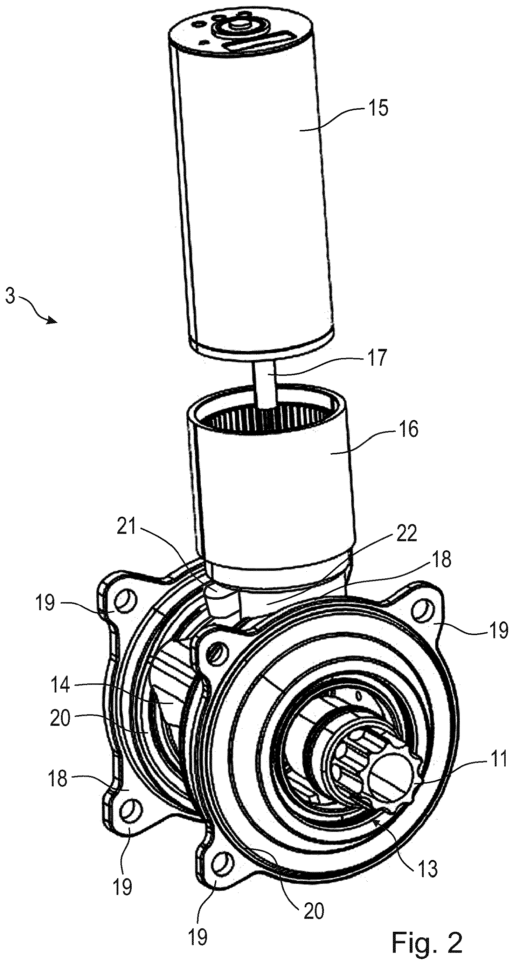

In der perspektivischen Darstellung der Antriebsbaugruppe 3 in Fig. 2 ist neben der Tretlagereinheit 13 mit dem Tretlagergehäuse 14 und der Tretlagerwelle 11 auch ein Elektromotor 15 und eine Getriebeeinheit 16 vorgesehen. Die Motorwelle 17 des Elektromotors 15 steht senkrecht zur Tretlagerwelle 11 und ist über das Getriebe 16 mechanisch mit der Tretlagerwelle 11 verbunden. Das Tretlagergehäuse 14 erstreckt sich im Wesentlichen axial zur Tretlagerwelle 11 und wird an den beiden Enden in Richtung der Tretlagerwelle 11 von jeweils einem Montagerahmen 18 am Fahrradrahmen 2 (nicht gezeigt) gehalten. Am Umfang der Montagerahmen 18 sind mehrere Befestigungsösen 19 vorgesehen, mit denen die Montagerahmen 18 mittels geeigneter Befestigungsmittel (nicht gezeigt) an dem Fahrradrahmen 2 fest montiert werden können. Zwischen dem Montagerahmen 18 und dem Tretlagergehäuse 14 ist jeweils ein elastisches Verbindungselement 20 vorgesehen, wobei das elastische Verbindungselement 20 den Montagerahmen 18 und das Tretlagergehäuse 14 berührungsfrei voneinander trennt, sodass kein unmittelbarer Kontakt zwischen dem Tretlagergehäuse 14 und dem Montagerahmen 18 für eine ungedämpfte Kraft- oder Drehmomentübertragung besteht. Das elastische Verbindungselement 20 stellt dabei eine funktionale Kopplung zwischen dem Tretlagergehäuse 14 und dem Montagerahmen 18 her, die neben einer Vibrationsdämpfung der in der Tretlagereinheit 13 auftretenden Vibrationen und Schwingungen auch eine elastomechanische Verbindung zwischen dem Montagerahmen 18 und dem Tretlagergehäuse 14 ermöglicht, um die Antriebsbaugruppe 3 dauerhaft und sicher am Fahrradrahmen 2 zu positionieren. Im Gegensatz zu einer technisch ebenfalls möglichen Entkopplung der hauptsächlich im Elektromotor 15 entstehenden Vibrationen und Schwingungen zwischen dem Elektromotor 15 und dem Getriebe 16, bzw. zwischen dem Getriebe 16 und dem Tretlagergehäuse 14, ermöglicht das elastische Verbindungselement 20 zwischen dem Montagerahmen 18 und dem Tretlagergehäuse 14 neben einer signifikanten Reduzierung der Geräusche und Vibrationen des Elektromotorantriebs bestehend aus Elektromotor 15 und Getriebe 16 über eine gute thermische Kopplung des Elektromotorantriebs mit der Tretlagereinheit 13 eine sichere Ableitung der im Elektromotorantrieb entstehenden Wärme an die Umgebung. Dabei kann zur Begrenzung des auf das Tretlagergehäuse 14 wirkenden Drehmoments eine elastische Drehmomentabstützung 21 vorgesehen sein, die an dem Anschlussstutzen 22 des Tretlagergehäuses 14 zur Anordnung des Elektromotorantriebs aus Getriebe 16 und Elektromotor 15 oder an dem Elektromotor 15 oder der Getriebeeinheit 16 selbst angeordnet ist und sich gegen den Fahrradrahmen 2 abstützt. Die elastische Drehmomentabstützung 21 verhindert bei einer Veränderung der Leistungsabgabe des Elektromotorantriebs eine Schwenkbewegung der Tretlagereinheit 13 um die Tretlagerwelle 11.

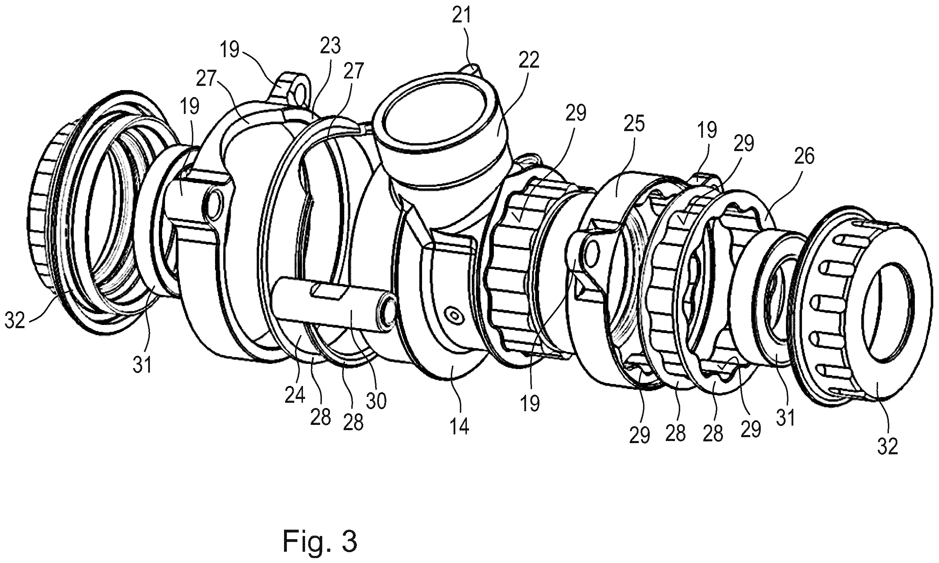

Die Fig. 3 zeigt eine Explosionsansicht des Tretlagergehäuses 14 und der Befestigungskomponenten einer weiteren Ausführungsform einer Antriebsbaugruppe 3. Das Tretlagergehäuse 14 weist neben dem länglichen Körper zur Aufnahme der Tretlagerwelle 11 auch hier wieder einen Anschlussstutzen 23 für den Elektromotorantrieb auf, an dem ebenfalls eine elastische Drehmomentabstützung 21 vorgesehen ist. Die Montagerahmen 18 sind hier als einfache Montageringe 23, 25 ausgebildet mit radial vorstehenden Befestigungsösen 19. Den Montageringen 23, 25 ist jeweils ein elastisches Verbindungselement 20 in Form eines elastischen Ringes 24, 26 zugeordnet, die im Gegensatz zu dem mit dem Montagerahmen 18 festverbundenen elastischen Verbindungselement 20 in Fig. 2 getrennt zu den Montageringen 23, 25 ausgebildet sind. Angrenzend an die Montageringe 23, 25 bzw. elastischen Ringe 24, 26 sind in der Explosionsansicht in Fig. 3 die Lager 31 für die Tretlagerwelle 11 sowie die Tretlagerdeckel 32 zur axialen und radialen Anordnung der Tretlagerwelle 11 in dem Tretlagergehäuse 14 zu erkennen. Die auf der linken Seite des Tretlagergehäuses 14 in Fig. 3 dargestellten Montageringe 23 und elastischen Ringe 24 weisen eine Ausnehmung 27 auf, die für einen Formschluss mit dem Tretlagergehäuse 14 bereichsweise in den Anschlussstutzen 22 eingreift. Hierdurch wird eine rotative Relativbewegung dieses Montagerings 23 und des zugehörigen elastischen Rings 24 zum Tretlagergehäuse 14 begrenzt, während eine Bewegung in axialer Richtung der Tretlagerwelle 11 zum Ausgleich von Produktionstoleranzen möglich ist. Dabei weist der elastische Ring 24 radiale Stege 28 auf, die den Montageringen 23 seitlich umschließen, und trotz der seitlichen, formschlüssigen Verbindung zum Tretlagergehäuse eine gute Vibrationsentkopplung sicherzustellen.

Die auf der rechten Seite des Tretlagergehäuses 14 in Fig. 3 angeordneten Montageringe 25 und elastischen Ringe 26 weisen eine formschlüssige Ausgestaltung mit radialen Formschlusselementen in Form von gewellten Oberflächen 29 an der Innenumfangsfläche des Montagerings 25, der Außen- und Innenumfangsfläche des elastischen Rings 26 und der Außenumfangsfläche des Tretlagergehäuses 14 auf. Dadurch wird nicht nur eine rotative Relativbewegung zwischen dem Montagering 25 und dem elastischen Ring 26, sondern auch zwischen dem elastischen Ring 26 und dem Tretlagergehäuse 14 verhindert oder zumindest sehr begrenzt. Hierdurch wird eine gute elastomechanische Kopplung zwischen dem Tretlagergehäuse 14 und dem Montagering 25 bzw. dem Fahrradrahmen 2 ermöglicht mit einer effektiven Dämpfung der Vibration und Schwingungen. Auch dieser elastische Ring 26 weist wieder radial vorstehende seitliche Stege 28 auf, um einen unmittelbaren Kontakt zwischen dem Tretlagergehäuse 14 und dem Montagering 25 zu verhindern.

Um mittels der Tretlagereinheit 13 eine Versteifung des Fahrradrahmens 2 zu erzielen, kann zwischen den Befestigungsösen 19 der Montageringe 23, 25 eine Versteifungshülse 30 positioniert werden, durch die sich entsprechende Befestigungsmittel (nicht gezeigt) für die Befestigung der Montageringe 23, 25 am Fahrradrahmen 2 hindurch erstrecken, wodurch auf entsprechende Befestigungseinrichtungen am Fahrradrahmen 2 selbst verzichtet werden kann. Die Versteifungshülse 30 ermöglicht so eine Versteifung des Fahrradrahmens 2 mittels der Tretlagereinheit 13, ohne den Fahrradrahmen 2 im Bereich der Tretlagereinheit 13 strukturell deutlich massiver auszugestalten, um die Tretlagereinheit 13 mit dem Elektromotorantrieb aus Elektromotor 15 und Getriebeeinheit 16 aufzunehmen.

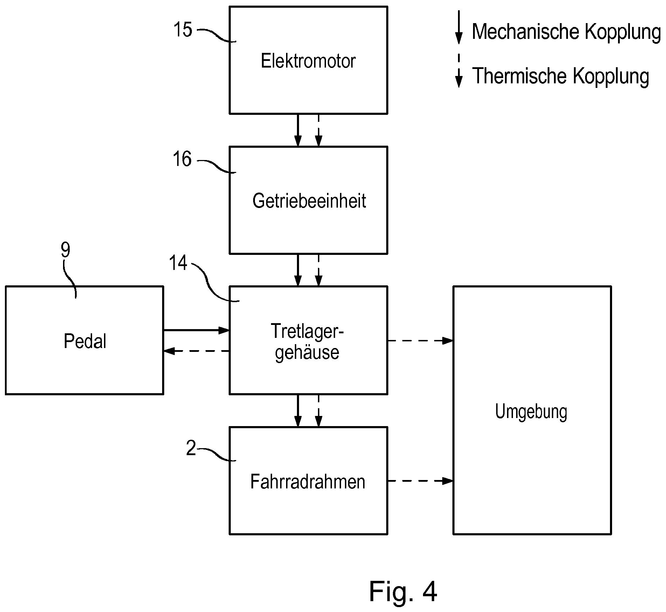

Fig. 4 zeigt eine schematische Darstellung der mechanischen und thermischen Kopplung der Antriebsbaugruppe für ein Elektrofahrrad 1. Neben der Antriebsenergie, die über die Getriebeeinheit 16 an die Tretlagerwelle 11 übertragen wird, erzeugt der Elektromotor 15 auch Wärme durch die Umwandlung elektrischer in mechanischer Energie, sowie Vibrationen und Schwingungen. Durch die direkte Verbindung zwischen dem Elektromotor 15 und dem Getriebe 16 sowie dem Tretlagergehäuse 14 wird über die thermische Kopplung die im Elektromotor 15 erzeugte Wärme und mittels der mechanischen Kopplung die im Elektromotor 15 entstehenden Schwingungen und Vibrationen übertragen. Von dem Tretlagergehäuse 14 wird die Wärme sowohl an die Umgebung als auch über die Tretlagerwelle 11 auf die Tretkurbel 8 und Pedale 9 abgegeben. Über die Pedale 9 und die Tretkurbeln 8 kann über die mechanische Kopplung mit der Tretlagerwelle 11 wiederum eine manuelle Pedalkraft aufgebracht werden. Über die elastomechanische Kopplung zwischen dem Tretlagergehäuse 14 und dem Fahrradrahmen 2 kann über den leicht erhöhten thermischen Widerstand des elastischen Verbindungselements 20 ebenfalls ein Anteil der Wärme übertragen werden, die dann vom Fahrradrahmen 2 an die Umgebung abgegeben wird. Dabei verhindert das elastische Verbindungselement 20 die Übertragung der Vibrationen und Schwingungen an den Fahrradrahmen 2 und ermöglicht dazu eine ausreichende Abstützung der Tretlagereinheit 13 mit Elektromotorantrieb am Fahrradrahmen 2 und der mittels der Tretkurbel 8 von einem Nutzer aufgeprägten Pedalkraft.

### Bezugszeichenliste

- 1: Elektrofahrrad
- 2: Fahrradrahmen
- 3: Antriebsbaugruppe
- 4: Lenker
- 5: Vorderrad
- 6: Hinterrad
- 7: Antriebskette
- 8: Tretkurbeln
- 9: Pedale
- 10: Antriebszahnrad
- 11: Tretlagerwelle
- 12: Sattel
- 13: Tretlagereinheit
- 14: Tretlagergehäuse
- 15: Elektromotor
- 16: Getriebeeinheit
- 17: Motorwelle
- 18: Montagerahmen
- 19: Befestigungsösen
- 20: elastisches Verbindungselement
- 21: elastische Drehmomentabstützung
- 22: Anschlussstutzen
- 23: Montagering
- 24: elastischer Ring
- 25: Montagering
- 26: elastischer Ring
- 27: Ausnehmung
- 28: Stege
- 29: gewellte Oberfläche
- 30: Versteifungshülse
- 31: Lager
- 32: Tretlagerdeckel

## Patentansprüche

1. Antriebsbaugruppe (3) für ein Fahrrad, insbesondere für ein Elektrofahrrad (1) mit Elektromotorantrieb, mit einer Tretlagereinheit (13) mit Tretlagergehäuse (14), einer Befestigungseinrichtung zur stabilen Befestigung des Tretlagergehäuses (14) an einem Fahrradrahmen (2), wobei die Befestigungseinrichtung einen Montagerahmen (18) zur Befestigung am Fahrradrahmen (2) und ein elastisches Verbindungselement (20) zur mechanischen Kopplung und Vibrationsdämpfung zwischen Tretlagergehäuse (14) und Fahrradrahmen (2), das zwischen dem Montagerahmen (18) und dem Tretlagergehäuse (14) positioniert ist, aufweist, wobei die Befestigungseinrichtung mindestens zwei Montageringe (23,25) aufweist und das elastische Verbindungselement (20) mindestens zwei elastische Ringe (24,26) umfasst, die das Tretlagergehäuse (14) an beiden Enden des Tretlagergehäuses (14) radial zur Tretlagerwelle (11) umschließen und jeweils zwischen einem Montagering (23,25) und dem Tretlagergehäuse (14) positioniert sind, **dadurch gekennzeichnet, dass** mindestens ein Montagering (23,25) und ein zugeordneter elastischer Ring (24,26) jeweils mindestens ein Formschlusselement aufweisen, um eine relative rotative Bewegung zum Tretlagergehäuse (14) zu verhindern oder zumindest zu begrenzen.

2. Antriebsbaugruppe (3) nach Anspruch 1,
**dadurch gekennzeichnet, dass** die Tretlagereinheit (13) einen Elektromotor (15) und eine Tretlagerwelle (11) zum Antrieb des Fahrrads aufweist, wobei der Elektromotor (15) mit der Tretlagerwelle (11) gekoppelt ist, insbesondere über eine Getriebeeinheit (16) mit der Tretlagerwelle (11) gekoppelt ist.

3. Antriebsbaugruppe (3) nach Anspruch 2,
**dadurch gekennzeichnet, dass** eine elastische Drehmomentabstützung (21) zwischen dem Elektromotor (15) oder einer Getriebeeinheit (16) und dem Fahrradrahmen (2) vorgesehen ist.

4. Antriebsbaugruppe (3) nach einem der Ansprüche 1 bis 3,
**dadurch gekennzeichnet, dass** das elastische Verbindungselement (20) und der Montagerahmen (18) unlösbar miteinander verbunden sind, wobei das elastische Verbindungselement (20) bevorzugt an dem Montagerahmen (18) angespritzt oder aufvulkanisiert ist.

5. Antriebsbaugruppe (3) nach einem der Ansprüche 1 bis 4,
**dadurch gekennzeichnet, dass** das elastische Verbindungselement (20) ein E-Modul zwischen 0,1 und 100,0 MPa, bevorzugt zwischen 2,0 und 20,0 MPa aufweist.

6. Antriebsbaugruppe (3) nach einem der Ansprüche 1 bis 5,
**dadurch gekennzeichnet, dass** das elastische Verbindungselement (20) aus einem Elastomer-Material hergestellt ist, bevorzugt aus einem EPDM-Material, einem thermoplastischen Elastomer oder einem Silikon-Kautschuk hergestellt ist.

7. Antriebsbaugruppe (3) nach einem der Ansprüche 1 bis 6,
**dadurch gekennzeichnet, dass** die Formschlusselemente als seitliche Ausnehmungen (27) ausgebildet sind.

8. Antriebsbaugruppe (3) nach einem der Ansprüche 1 bis 7,
**dadurch gekennzeichnet, dass** mindestens ein Montagering (23,25) und ein zugeordneter elastischer Ring (24,26) zueinander eine formschlüssige Ausgestaltung mit radialen Formschlusselementen (29) aufweisen, um eine relative rotative Bewegung zueinander zu verhindern oder zumindest zu begrenzen.

9. Antriebsbaugruppe (3) nach einem der Ansprüche 1 bis 8,
**dadurch gekennzeichnet, dass** mindestens ein elastischer Ring (24,26) eine formschlüssige Ausgestaltung mit radialen Formschlusselementen (29) gegenüber einer Anlagefläche des elastischen Rings (24,26) auf dem Tretlagergehäuse (14) aufweist, um eine relative rotative Bewegung zwischen dem elastischen Ring (24,26) und dem Tretlagergehäuse (14) zu verhindern oder zumindest zu begrenzen.

10. Antriebsbaugruppe (3) nach einem der Ansprüche 1 bis 9,
**dadurch gekennzeichnet, dass** mindestens ein Montagering (23,25) und ein zugeordneter elastischer Ring (24,26) in Richtung der Tretlagerwelle verschiebbar auf dem Tretlagergehäuse (14) gelagert sind.

11. Antriebsbaugruppe (3) nach einem der Ansprüche 1 bis 10,
**dadurch gekennzeichnet, dass** mindestens eine Versteifungshülse (30) vorgesehen ist, wobei sich ein Befestigungsmittel zur Befestigung der mindestens zwei Montageringe (23,25) am Fahrradrahmen (2) durch die Versteifungshülse (30) erstreckt.

12. Elektrofahrrad (1) mit einem Elektromotorantrieb, einem Fahrradrahmen (2) und einer Antriebsbaugruppe (3) nach einem der Ansprüche 1 bis 11, wobei die Tretlagereinheit (13) zum Antrieb des Elektrofahrrads (1) eine Tretlagerwelle (11) mit Tretkurbeln (8) und einen mit der Tretlagerwelle (11) gekoppelten Elektromotor (15) aufweist, wobei der Elektromotor (15) insbesondere über eine Getriebeeinheit (16) mit der Tretlagerwelle (11) gekoppelt ist.

## Claims

1. A drive assembly (3) for a bicycle, in particular for an electric bicycle (1) having an electric motor drive, with a bottom bracket unit (13) having a bottom bracket housing (14), a fastening device for stable fastening of the bottom bracket housing (14) to a bicycle frame (2), wherein the fastening device comprises a mounting frame (18) for fastening to the bicycle frame (2) and an elastic connecting element (20) for mechanical coupling and vibration damping between the bottom bracket housing (14) and the bicycle frame (2), which is positioned between the mounting frame (18) and the bottom bracket housing (14), wherein the fastening device has at least two mounting rings (23, 25) and the elastic connecting element (20) comprises at least two elastic rings (24, 26) which enclose the bottom bracket housing (14) at both ends of the bottom bracket housing (14) radially to a bottom bracket shaft (11) and are each positioned between one mounting ring (23, 25) and the bottom bracket housing (14),
**characterized in that** at least one mounting ring (23, 25) and one associated elastic ring (24, 26) each have at least one positive form-locking element in order to prevent or at least limit a relative rotational movement with respect to the bottom bracket housing (14).

2. The drive assembly (3) according to claim 1,
**characterized in that** the bottom bracket unit (13) comprises an electric motor (15) and a bottom bracket shaft (11) for driving the bicycle, wherein the electric motor (15) is coupled to the bottom bracket shaft (11), in particular is coupled to the bottom bracket shaft (11) via a gear unit (16).

3. The drive assembly (3) according to claim 2,
**characterized in that** an elastic torque support (21) is provided between the electric motor (15) or a gear unit (16) and the bicycle frame (2).

4. The drive assembly (3) according to any one of claims 1 to 3,
**characterized in that** the elastic connecting element (20) and the mounting frame (18) are non-detachably connected to one another, the elastic connecting element (20) preferably being injection-molded or vulcanized onto the mounting frame (18).

5. The drive assembly (3) according to one of claims 1 to 4,
**characterized in that** the elastic connecting element (20) has a modulus of elasticity between 0.1 and 100.0 MPa, preferably between 2.0 and 20.0 MPa.

6. The drive assembly (3) according to any one of claims 1 to 5,
**characterized in that** the elastic connecting element (20) is made of an elastomer material, preferably made of an EPDM material, a thermoplastic elastomer or a silicone rubber.

7. The drive assembly (3) according to any one of claims 1 to 6,
**characterized in that** the positive form-locking elements are formed as lateral recesses (27).

8. The drive assembly (3) according to one of claims 1 to 7,
**characterized in that** at least one mounting ring (23, 25) and an associated elastic ring (24, 26) in relation to one another have a form-locking design with radial form-locking elements (29) in order to prevent or at least limit a relative rotational movement to one another.

9. The drive assembly (3) according to one of claims 1 to 8,
**characterized in that** at least one elastic ring (24, 26) has a form-locking configuration with radial form-locking elements (29) with respect to an abutment surface of the elastic ring (24, 26) on the bottom bracket housing (14) in order to prevent or at least limit a relative rotational movement between the elastic ring (24, 26) and the bottom bracket housing (14).

10. The drive assembly (3) according to any one of claims 1 to 9,
**characterized in that** at least one mounting ring (23, 25) and one associated elastic ring (24, 26) are mounted on the bottom bracket housing (14) so as to be displaceable in the direction of the bottom bracket shaft.

11. The drive assembly (3) according to one of claims 1 to 10,
**characterized in that** at least one stiffening sleeve (30) is provided, wherein a fastening means for fastening the at least two mounting rings (23, 25) to the bicycle frame (2) extends through the stiffening sleeve (30).

12. An Electric bicycle (1) with an electric motor drive, a bicycle frame (2) and a drive assembly (3) according to one of claims 1 to 11, wherein the bottom bracket unit (13) for driving the electric bicycle (1) has a bottom bracket shaft (11) with pedal cranks (8) and an electric motor (15) coupled to the bottom bracket shaft (11), wherein the electric motor (15) is coupled to the bottom bracket shaft (11) in particular via a gear unit (16).

## Revendications

1. Ensemble d'entraînement (3) pour une bicyclette, en particulier pour une bicyclette électrique (1) avec entraînement par moteur électrique, comprenant une unité de pédalier (13) avec boîtier de pédalier (14), un dispositif de fixation permettant une fixation stable du boîtier de pédalier (14) sur un cadre de bicyclette (2), dans lequel le dispositif de fixation présente un cadre de montage (18) permettant une fixation sur le cadre de bicyclette (2) et un élément élastique de liaison (20) positionné entre le cadre de montage (18) et le boîtier de pédalier (14) et permettant un couplage mécanique et une atténuation des vibrations entre le boîtier de pédalier (14) et le cadre de bicyclette (2), dans lequel le dispositif de fixation présente au moins deux bagues de montage (23, 25) et l'élément élastique de liaison (20) comprend au moins deux bagues élastiques (24, 26) qui entourent le boîtier de pédalier (14) aux deux extrémités du boîtier de pédalier (14) de manière radiale par rapport à l'arbre de pédalier (11) et sont positionnées respectivement entre une bague de montage (23, 25) et le boîtier de pédalier (14), **caractérisé en ce que** au moins une bague de montage (23, 25) et une bague élastique (24, 26) associée présentent respectivement au moins un élément à verrouillage par complémentarité de forme (24, 26) afin d'empêcher ou au moins limiter un mouvement rotatif relatif par rapport au boîtier de pédalier (14).

2. Ensemble d'entraînement (3) selon la revendication 1,
**caractérisé en ce que** l'unité de pédalier (13) présente un moteur électrique (15) et un arbre de pédalier (11) permettant l'entraînement de la bicyclette, dans lequel le moteur électrique (15) est couplé à l'arbre de pédalier (11), en particulier est couplé à l'arbre de pédalier (11) par l'intermédiaire d'une unité de transmission (16).

3. Ensemble d'entraînement (3) selon la revendication 2,
**caractérisé en ce qu'un** support élastique de couple (21) est prévu entre le moteur électrique (15) ou une unité de transmission (16) et le cadre de bicyclette (2).

4. Ensemble d'entraînement (3) selon l'une quelconque des revendications 1 à 3, **caractérisé en ce que** l'élément élastique de liaison (20) et le cadre de montage (18) sont reliés l'un à l'autre de manière indissociable, dans lequel l'élément élastique de liaison (20) est de manière préférée moulé par injection ou vulcanisé sur le cadre de montage (18).

5. Ensemble d'entraînement (3) selon l'une quelconque des revendications 1 à 4, **caractérisé en ce que** l'élément élastique de liaison (20) présente un module d'élasticité compris entre 0,1 et 100,0 MPa, de manière préférée compris entre 2,0 et 20,0 MPa.

6. Ensemble d'entraînement (3) selon l'une quelconque des revendications 1 à 5, **caractérisé en ce que** l'élément élastique de liaison (20) est fabriqué à partir d'un matériau élastomère, de manière préférée à partir d'un matériau EPDM, d'un élastomère thermoplastique ou d'un caoutchouc silicone.

7. Ensemble d'entraînement (3) selon l'une quelconque des revendications 1 à 6, **caractérisée en ce que** les éléments à verrouillage par complémentarité de forme sont réalisés sous forme d'évidements latéraux (27).

8. Ensemble d'entraînement (3) selon l'une quelconque des revendications 1 à 7, **caractérisé en ce que** au moins une bague de montage (23, 25) et une bague élastique (24, 26) associée présentent l'une par rapport à l'autre une configuration à verrouillage par complémentarité de forme avec des éléments à verrouillage par complémentarité de forme radiaux (29), afin d'empêcher ou au moins limiter un mouvement de rotation relatif l'une par rapport à l'autre.

9. Ensemble d'entraînement (3) selon l'une quelconque des revendications 1 à 8, **caractérisé en ce que** au moins une bague élastique (24, 26) présente une configuration à verrouillage par complémentarité de forme avec des éléments à verrouillage par complémentarité de forme radiaux (29) vis-à-vis d'une surface d'appui de la bague élastique (24, 26) sur le boîtier de pédalier (14), afin d'empêcher ou au moins limiter un mouvement de rotation relatif entre la bague élastique (24, 26) et le boîtier de pédalier (14).

10. Ensemble d'entraînement (3) selon l'une quelconque des revendications 1 à 9, **caractérisé en ce que** au moins une bague de montage (23, 25) et une bague élastique (24, 26) associée sont montées sur le boîtier de pédalier (14) de manière à pouvoir être déplacées dans la direction de l'arbre de pédalier.

11. Ensemble d'entraînement (3) selon l'une quelconque des revendications 1 à 10, **caractérisé en ce que** au moins un manchon de rigidification (30) est prévu, dans lequel un moyen de fixation, permettant de fixer les au moins deux bagues de montage (23, 25) sur le cadre de bicyclette (2), s'étend à travers le manchon de rigidification (30).

12. Bicyclette électrique (1) avec un entraînement par moteur électrique, un cadre de bicyclette (2) et un ensemble d'entraînement (3) selon l'une quelconque des revendications 1 à 11, dans laquelle l'unité de pédalier (13) présente un arbre de pédalier (11) avec des manivelles de pédalier (8) et un moteur électrique (15) couplé à l'arbre de pédalier (11) afin d'entraîner la bicyclette électrique (1), dans laquelle le moteur électrique (15) est couplé à l'arbre de pédalier (11) en particulier par l'intermédiaire d'une unité de transmission (16).
